# EUROPÄISCHE PATENTSCHRIFT

(11) **EP 0 592 698 B1**
(45) Veröffentlichungstag und Bekanntmachung des Hinweises auf die Patenterteilung: **20.12.1995**
(21) Anmeldenummer: 92117352.2
(22) Anmeldetag: 10.10.1992
(51) Int. Cl.: B01D 39/12, B01D 71/02, B01D 65/08, B01D 63/08, B01D 63/06

(54) **Ultrafiltrationsseparator**
Ultra-filtration separator
Séparateur par ultrafiltration

(43) Veröffentlichungstag der Anmeldung: 20.04.1994
(73) Patentinhaber: Jörgens, Klaus, D-42111 Wuppertal (DE)
(72) Erfinder: Jörgens, Klaus, D-42111 Wuppertal (DE)
(74) Vertreter: Rehders, Jochen, Dipl.-Ing.

(56) Entgegenhaltungen:
- WO-A-91/02555
- DE-A- 2 458 700
- DE-A- 2 541 383
- DE-A- 4 112 231
- FR-A- 2 172 067
- FR-E- 64 152
- GB-A- 618 316
- US-A- 3 690 606
- DRAHT Bd. 39, Nr. 12, 1988, Seiten 1164 - 1168 C. HAMANN 'FEINDRAHTGEWEBE ALS FILTERMEDIUM'

## Beschreibung

Die Erfindung betrifft einen Ultrafiltrationsseparator zum Abtrennen von sog. Permeat, d. h. hochgereinigter Flüssigkeit als Ultrafiltrationsseparatorfiltrat aus einer Flüssigkeit, die in ständigem Fluß durch den Ultrafiltrationsseparator geführt wird. Derartige Ultrafiltrationsseparatoren beruhen auf dem Prinzip der Umkehrosmose und können zur Abwasserreinigung, zur Dialyse, zum Keimfreimachen von Luft, zur Meerwasserentsalzung und dergleichen mehr dienen.

Membranen sind die Basis eines jeden Umkehrosmose- oder Ultrafiltrationssystems. Diese Membranen werden üblicherweise aus unterschiedlichen Polymermaterialien, wie Polysulfon oder Zelluloseacetat gefertigt und weisen Poren auf, deren Größe die Durchlässigkeit dieser Membranen bestimmt. Zur Erhöhung der mechanischen Festigkeit werden die Membranen auf der Rückseite mit einem Trägermaterial, z. B. einem Polyethylen-Trägergewebe ausgerüstet.

Die bekannten Ultrafiltrationsseparatoren können als Plattenfilter oder als Wickelmodule hergestellt sein.

Ultrafiltrationsseparatoren unterscheiden sich von herkömmlichen Filtern dadurch, daß das zu filternde Medium parallel zur Membranoberfläche strömt und aufgrund einer Druckdifferenz zwischen den Membranseiten ein geringer Anteil von Flüssigkeit durch die Membran hindurchtritt, wobei alle die Porengröße übersteigende Bestandteile zurückgehalten werden.

Ein besonderer Anwendungsfall derartiger Ultrafiltrationsseparatoren ist beim anodischen oder kathodischen Elektrolackieren von Gegenständen gegeben. Hierbei werden metallische Gegenstände oder Gegenstände, deren Oberfläche elektrisch leitend gemacht ist, mit einer Elektrolytflüssigkeit entgegengesetzt der elektrische Polarität der Gegenstände in Berührung gebracht, in der etwa 8 bis 23 % Festkörper enthalten sind. Durch Anlegen von Gleichstrom kommt es zu einer Elektrokoagulation und die Gegenstände werden gleichmäßig beschichtet. Die Gegenstände werden anschließend gespült, so daß ein gleichmäßiger läuferfreier Film zurückbleibt, der anschließend eingebrannt wird. Dieses Spülen kann mit reinem Wasser erfolgen, führt dann jedoch zu großen, aufzubereitenden Abwassermengen. Daher wird die Elektrolytflüssigkeit ständig über einen Ultrafiltrationsseparator umgepumpt und das Ultrafiltrat, d. h. das Permeat, wird zum Spülen der Gegenstände benutzt. Das mit Elektrolytflüssigkeit angereicherte Spülmittel fließt wieder in das Elektrolytflüssigkeitsbecken zurück, so daß das Elektrolackieren praktisch verlustfrei mit etwa 98 % Materialausnutzung durchführbar ist. Hinzu kommt, daß durch das Spülen der elektrolackierten Gegenstände keine Applikationsfehler wie Tropfen und Läufer auftreten können. Auf diese Weise wird ein in sich geschlossenes System unter quantitativer Ausnutzung des Badmaterials erreicht, wobei keine Abwasserprobleme entstehen.

Allerdings muß ein kontinuierlicher Abzug von Ultrafiltrat stattfinden, da das Ultrafiltrat in einigen Fällen als Spülflüssigkeit benutzt wird, der Abzug des Ultrafiltrats der Reinigung des Lackes dient und die Stabilisierung des Bades ermöglicht.

Die bekannten, hierfür verwendeten Ultrafiltrationsseparatoren, die mit Membranen auf Basis von porösen Kunststoffolien arbeiten, lassen keine hohen Flüssigkeitstemperaturen zu, die empfohlene Temperatur liegt bei 30° C, die maximal mögliche Temperatur liegt bei 90° C. Dies führt dazu, daß sich die bekannten Ultrafiltrationsseparatoren nicht mit Dampf und/oder Heißluft bei hohen Temperaturen sterilisieren lassen. Des weiteren ist es erforderlich, Reinigungswasser, das mit einer Temperatur von 80° zum Reinigen in Großanlagen benutzt wird, wenn es in Ultrafiltrationsseparatoren behandelt werden soll, zunächst auf eine für die bekannten Ultrafiltrationsseparatoren erträgliche Temperatur abzukühlen, um es anschließend wieder zu erwärmen. Es liegt auf der Hand, daß dies mit großen Wärmeverlusten verbunden ist.

Da die bekannten Ultrafiltrationsseparatoren sehr empfindlich gegen Klumpenbildung oder Agglomerat sind, wodurch die Poren zugesetzt werden, ist die Standzeit derartiger handelsüblicher Ultrafiltrationsseparatoren sehr unterschiedlich und kann zwischen einer Standzeit von 0,5 Stunden und 4 Monaten schwanken. Diese Standzeit läßt sich auch nicht durch eine Spülung verlängern, da die bekannten Ultrafiltrationsseparatoren aufgrund der mechanischen Empfindlichkeit der Membranen keine Rückstromreinigung zulassen. Es ist nur eine Spülung mit bestimmten, die Membran nicht angreifenden Lösungsmitteln in Flußrichtung möglich, die aber wenig wirksam ist. Aus diesem Grunde nimmt die Filterleistung während des Einsatzes stetig ab, so daß eine Ultrafiltrationsanlage bei der Inbetriebnahme stets erheblich überdimensioniert sein muß, um gegen Ende der Filterstandzeit noch eine ausreichende Filterleistung zu erreichen. Schließlich ist auch noch zu erwähnen, daß die Behandlung von Elektrolytflüssigkeit bei anodischen oder kathodischen Elektrolackierung von Gegenständen Probleme mit sich bringt, da die Lackpigmente sehr scharfkantig sind und zu einer schnellen Abnutzung sämtlicher Teile einer Lackieranlage, insbesondere der Membranen in den Ultrafiltrationsseparatoren führen.

Aus der deutschen Offenlegungsschrift 24 58 700 ist ein Drahtsieb bekannt, das aus einem ersten Satz von einander parallelen Drähten oder einem oder mehreren gekrümmten, auf Teilen ihrer Länge im wesentlichen parallelen Drähten, die die Siebfläche bilden und zwischen sich schmale Schlitze lassen und einem zweiten Satz von Drähten, die die Siebdrähte tragen, besteht. Die Querschnitte der Siebdrähte und der Tragdrähte sind im wesentlichen mit ihren Spitzen aneinanderliegende Dreiecke, die an den Anlagestellen miteinander verschweißt sind. Die Schlitzweite wird durch Pressen auf Werte von 1 bis 20 Tausendstel Millimeter verringert, wobei die durch plastische Verformung bewirkte Längenveränderung des Drahtsiebes 1 bis 4 %, gemessen längs der Längsachse der Drähte, nicht überschreiten soll.

Der Erfindung liegt die Aufgabe zugrunde, einen Ultrafiltrationsseparator zu schaffen, der eine hohe Resistenz gegen Lösungsmittel und Chemikalien aufweist, eine hohe Temperaturfestigkeit und mechanische Widerstandsfähigkeit zeigt, so daß die Möglichkeit einer Rückstromreinigung, ggf. unter Verwendung von scharfen Lösungsmitteln und der Sterilisation bei Verwendung im medizinischen Bereich gegeben ist.

Ausgehend von dieser Aufgabenstellung wird erfindungsgemäß vorgeschlagen, für die Ultrafiltrationseperatormembran ein Metalldrahtgewebe mit einem Drahtdurchmesser von weniger als 0,02 mm, mehr als 2000 Schuß, d.h. mehr als 2000 Maschen je Zoll, und mit einer durch Flachwalzen oder Flachpressen weniger als 0,004 mm verringerten Maschenweite zu verwenden. Vorzugsweise kann das Metalldrahtgewebe mit mehr als 3000 Schuß, d.h. mehr als 3000 Maschen je Zoll, und einer durch Flachwalzen oder Flachpressen auf weniger als 0,002 mm verringerten Maschenweite hergestellt sein. Die Metalldrahtgewebe können vorzugsweise aus nicht rostendem Stahl, wie nichtrostenden Stahldrähten, z. B. der Qualität 1.4301 oder aus Titandrähten bestehen. Das Metalldrahtgewebe kann in einer oder mehreren aufeinander gelegten oder gewickelten Lagen verwendet werden. Derartige Metalldrahtgewebe werden von der Fa. Weisse und Eschrich, Lauensteiner Str. 20 in 8642 Ludwigstadt hergestellt.

Somit steht eine Ultrafiltrationsseparatormembran zur Verfügung, die die Eigenschaften der verwendeten Metalldrähte aufweist. Die erfindungsgemäße Ultrafiltrationsseparatormembran weist eine hohe mechanische Festigkeit auf, ist aufgrund des hohen Elastizitätsmoduls, besonders des Titans wenig verformbar, so daß sich die Maschenweite aufgrund der zwischen den Membranseiten herrschenden Druckdifferenz nicht oder nur geringfügig vergrößert. Die erfindungsgemäße Ultrafiltrationsseparatormembran ist korrosionsfest und temperaturfest, läßt sich also mit beliebigen Lösungsmitteln, Laugen und vielen Säuren behandeln und reinigen sowie bei hohen Temperaturen sterilisieren. Die erfindungsgemäße Ultrafiltrationsseparatormembran ist unempfindlich gegen scharfkantige Pigmente in der beim Elektrolackieren verwendete Elektrolytflüssigkeit und läßt sich im Gegenstrom reinigen. Vorzugsweise können die erfindungsgemäße Ultrafiltrationsseparatorsmembranen parallel zur Strömungsrichtung des zu filtrierenden Mediums angeordnet und auf der Membran quer zur Strömungsrichtung turbulenzerzeugende Erhöhungen angeordnet sein, wobei sich die Erhöhungen zur Strömungsrichtung in einem Winkel von 90° über eine größere Länge erstrecken können. Auf diese Weise wird der Hauptstrom des zu filternden Mediums parallel an der Membranoberfläche entlanggeführt, jedoch wird ein Zusetzen der Poren durch die turbulenzerzeugenden Erhöhungen verhindert. Die Anordnung der länglichen Erhöhungen mit einem Winkel von 90° zur Strömungsrichtung trägt dazu bei, sich im Totwassergebiet der Erhöhungen ansammelnde Feststoffe abzuleiten.

Die länglichen Erhöhungen können auf die Membran aufgesetzt sein, was sich besonders dann ergibt, wenn die Membran auf einem rechteckigen oder quadratischen Rahmen mit quer zur Strömungsrichtung verlaufenden Verbindungsstegen angeordnet ist. Allein durch die Druckdifferenz zwischen den beiden Membranseiten ergeben auf der Rückseite angeordnete Verbindungsstege bereits turbulenzerzeugende Erhöhungen auf der Druckseite. Vorzugsweise kann die Membran zwischen zwei rechteckigen oder quadratischen Rahmen mit quer zur Strömungsrichtung verlaufenden Verbindungsstegen eingespannt sein, wobei die Verbindungsstege auf der Druckseite niedriger als die Rahmenleisten sein können.

Mehrere Rahmen mit Membranen können parallel zueinander zu einem Plattenfilter angeordnet sein.

Bei einer anderen vorteilhaften Ausführungsform kann wenigstens eine rohrförmige Membran in einem Rohr mit Abstand zur Rohrinnenwand und abgedichtet an den Rohrenden angeordnet sein, wobei die Rohrenden mit Abschlußdeckeln mit je einem Zufluß und einem Abfluß für das zu filternde Medium versehen sein können.

Als Abstandshalter für die Membran kann im Rohr eine an der Rohrinnenwand anliegende zylindrische Schraubenfeder angeordnet sein. Diese zylindrische Schraubenfeder kann bei einem Rohrinnendurchmesser von 80 mm, einen Drahtdurchmesser von 5 mm und eine Steigung von 30 mm aufweisen, so daß sich zwischen den Drahtwindungen ein genügender Zwischenraum zum Sammeln und Ableiten von Permeat ergibt. Die turbulenzerzeugenden Erhöhungen können durch Windungen einer in der rohrförmigen Membran an ihrer Innenwand anliegende zylindrische Schraubenfeder gebildet sein. Aufgrund der Steigung der zylindrischen Schraubenfeder bilden die Drahtwindungen einen Winkel zur Strömungsrichtung des zu filternden Mediums, so daß der bereits erwähnte Effekt, nämlich einerseits die Turbulenzbildung und andererseits der Abtransport von sich im Totwassergebiet der Drahtwindungen absetzenden Feststoffen gewährleistet ist.

Die als Abstandshalter dienende zylindrische Schraubenfeder und die die turbulenzerzeugende Erhöhung bildende zylindrische Schraubenfeder können mit entgegengesetzter Steigung, d. h. linkgsgängig bzw. rechtsgängig ausgebildet sein.

Die in der rohrförmigen Membran angeordnete zylindrische Schraubenfeder kann bei einem Rohrdurchmesser von 80 mm, ebenfalls einen Drahtdurchmesser von 4 mm und eine Steigung von 30 mm aufweisen.

Das zu filternde Medium kann durch den Innenraum der rohrförmigen Membran in einer schraubenförmig gewundenen Bahn geführt sein, indem der Innenraum der rohrförmigen Membran durch ein spiralig verdrehtes Band ausgefüllt ist, dessen Breite etwa dem Innendurchmesser der rohrförmigen Membran entspricht und das Rohr von Anfang bis Ende durchläuft.

In der Rohrwandung kann wenigstens ein Auslaß für Permeat an dem Rohrende, wo auch das zu filternde Medium austritt angeordnet sein. Ebenso können mehrere Permeatauslässe entlang der Rohrwandung zwischen den Windungen der zylindrischen Schraubenfeder angeordnet sein.

Der Durchsatz eines rohrförmigen Ultrafiltrationsseparators läßt sich erhöhen, wenn mehrere rohrförmigen Membranen konzentrisch und beabstandet zueinander in einem Rohr größeren Durchmessers angeordnet werden und entsprechend Ein- und Auslässe für zu filterndes Medium und für Permeat angeordnet werden.

Die Erfindung wird nachstehend anhand zweier in der Zeichnung dargestellter Ausführungsbeispiele des näheren erläutert. In der Zeichnung zeigen:
- Fig. 1: einen Längsschnitt durch einen rohrförmigen Ultrafiltrationsseparator,
- Fig. 2: eine Draufsicht auf ein rahmenförmiges Filterelement und
- Fig. 3: einen Längsschnitt durch einen plattenförmigen Ultrafiltrationsseparator.

Ein rohrförmiger Ultrafiltrationsseparator 1 besteht aus einem Rohr 2, an dessen Enden Flansche 3 angeordnet sind. Auf die Flansche 3 sind Abschlußdeckel 4 abgedichtet aufgeschraubt. Ein Abschlußdeckel 4 ist mit einem Zufluß 5 und der anderen Abschlußdeckel 4 mit einem Abfluß 6 für zu filterndes Medium versehen. Eine rohrförmig hergestellte Drahtgewebemembran 7 ist mit ihren umgebördelten Enden abgedichtet zwischen den Flanschen 3 und den Abschlußdeckeln 4 eingeklemmt. Es können mehreren Lagen der Drahtgewebemembran 7 übereinander gewickelt sein. Eine zylindrische Schraubenfeder 8 ist zwischen der Drahtgewebemembran 7 und der Innenwandung des Rohrs 2 angeordnet und dient als Abstandshalter für die Drahtgewebemembran 7 zum Rohr 2. In der rohrförmigen Drahtgewebemembran 7 ist eine weitere zylindrische Schraubenfeder 9 angeordnet, die an der Innenwandung der rohrförmigen Drahtgewebemembran 7 anliegt. Diese zylindrische Schraubenfeder 9 kann eine zur zylindrischen Schraubenfeder 8 entgegengesetzte Steigung aufweisen. Die rohrförmige Drahtgewebemembran ist somit zwischen den zylindrischen Schraubenfedern 8 und 9 abgestüzt, so daß es möglich ist, einen an sich als Permeatauslaß 10 dienenden Stutzen im Rohr 2 zur Reinigung der rohrförmigen Membran 7 mittels einer im Rückstrom zugeführten Flüssigkeit zu benutzen. Diese Flüssigkeit kann ein Lösungsmittel oder eine Reinigungsmittel enthaltende Flüssigkeit sein. Ebenso ist es möglich, die rohrförmige Drahtgewebemembran 7 über den Stutzen 10 mit Druckluft oder Heißdampf zu beaufschlagen.

Das zu filternde Medium wird über den Zufluß 5 zugeführt und fließt über den Abfluß 6 ab. Aufgrund der Druckdifferenz zwischen der Druckseite der rohrförmigen Membran 7 und dem Zwischenraum zwischen der rohrförmigen Membran 7 und dem Rohr 2 tritt durch die feinen Poren der rohrförmigen Drahtgewebemembran 7 Permeat hindurch und fließt über den Permeatauslaß 10 ab. Im Vergleich zum Durchfluß durch den Innenraum der rohrförmigen Drahtgewebemembran 7 ist der Permeatabfluß 10 sehr gering. So wird bei einer typischen Elektrolackieranlage ein Durchfluß von 12000 l/h Elektrolyt durch den Ultrafiltrationsseparator erreicht, während dabei etwa 80 l/h Permeat gewonnen werden.

Diese Menge genügt jedoch, um die beschichteten Gegenstände zu spülen und überflüssige Flüssigkeit abzuscheiden.

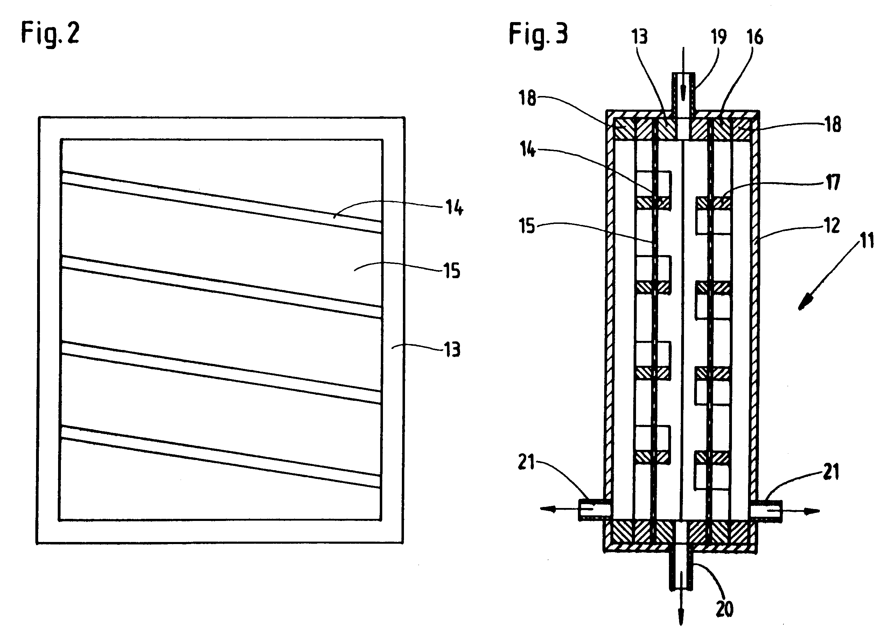

Der in Fig. 2 und 3 dargestellte plattenförmige Ultrafiltrationsseparator 11 besteht aus einem Gehäuse 12, in dem Drahtgewebemembranen 15 parallel zueinander angeordnet sind. Die Drahtgewebemembranen 15 können in mehreren Lagen übereinandergelegt sein. Diese Drahtgewebemembranen 15 sind zwischen zwei Rahmen 13, 16 eingeklemmt, die schräg verlaufende Verbindungsstege 14, 17 aufweisen. Die Verbindungsstege 17 dienen der Abstützung der Drahtgewebemembran 15 in der üblichen Durchflußrichtung von der Druckseite zu einem Permeatabfluß 21, während die Verbindungsstege 14 die länglichen, turbulenzerzeugenden Erhöhungen bilden. Um den Durchfluß des zu filternden Mediums parallel zu den Drahtgewebemembranen 15 von einem Zufluß 19 zu einem Abfluß 20 zu gewährleisten, ist die Höhe der Verbindungsstege 14 geringer als die der Rahmen 13. Die Verbindungsstege 14, 17 sind schräg angeordnet, um sich im Totwassergebiet der Verbindungsstege 14 absetzende Feststoffe seitlich abzuleiten.

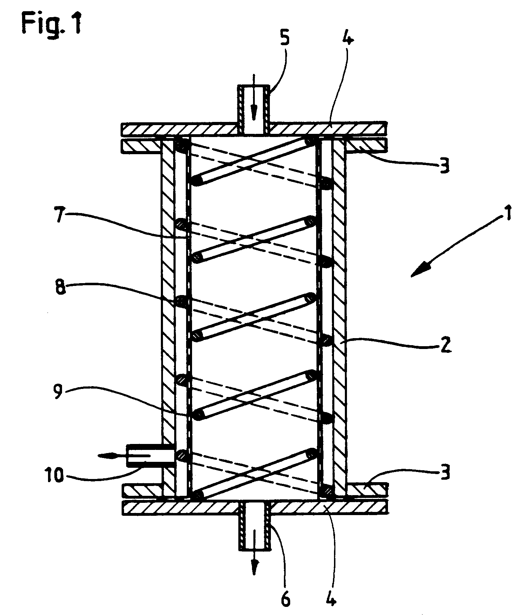

Das durch die Drahtgewebemembranen 15 hindurchtretende Permeat wird über die Permeatabflüsse 21 abgeführt. Diese Permeatabflüsse 21 lassen sich, wie bereits bezüglich der Vorrichtung gemäß Fig. 1 erwähnt, dazu verwenden, die Drahtgewebemembran 15 in Gegenstrom zu reinigen. Im dargestellten Beispiel sind zwei Drahtgewebemembranen 15 in ihren Rahmen 13, 16 parallel zueinander angeordnet. Zur Seitenwand des Gehäuses 12 sind weitere Rahmen 18 vorgesehen, die als Abstandshalter dienen und den Durchfluß des Permeats zu den Permeatabflüssen 21 ermöglichen.

Selbstverständlich läßt sich der in Fig. 2 und 3 dargestellte Plattenfilter durch eine parallele Anordnung einer Vielzahl von Drahtgewebemembranen ausbauen und im Durchsatz vergrößern, so wie dies bereits bezüglich der Ausführungsform gemäß Fig. 1 mit konzentrischen rohrförmigen Drahtgewebemembranen beschrieben wurde.

Das Metalldrahtgewebe weist einen Drahtdurchmesser von weniger als 0,02 mm und mehr als 2000 Schuß, d. h. mehr als 2000 Maschen je Zoll, vorzugsweise mehr als 3000 Schuß, d. h. mehr als 3000 Maschen je Zoll und eine durch Flachwalzen oder Flachpressen auf weniger als 0,004 mm vorzugsweise auf weniger als 0,002 mm verringerte Maschenweite auf und ist damit als Ultrafiltrationsmembran geeignet.

## Patentansprüche

1. Verwendung eines Metalldrahtgewebes mit einem Drahtdurchmesser < 0,02 mm, mehr als 2000 Schuß, d. h. mehr als 2000 Maschen je Zoll, und mit einer durch Flachwalzen oder Flachpressen auf < 0,004 mm verringerten Maschenweite als Ultrafiltrationsseparatormembran in einem Ultrafiltrationsseparator.

2. Verwendung eines Metalldrahtgewebes nach Anspruch 1 mit mehr als 3000 Schuß, d. h. mehr als 3000 Maschen je Zoll, und einer durch Flachwalzen oder Flachpressen auf
< 0,002 mm verringerten Maschenweite.

3. Verwendung eines aus nichtrostendem Stahl bestehenden Metalldrahtgewebes nach Anspruch 1 oder 2.

4. Verwendung eines aus Titandrähten bestehenden Metalldrahtgewebes nach Anspruch 1 und 2.

5. Ultrafiltrationsseparator mit
einer Ultrafiltrationsseparatormembran (7, 15)
aus einem nichtrostenden Stahl- oder Titandrahtgewebe mit einem Drahtdurchmesser < 0,02 mm, mehr als 2000 Schuß, d. h. mehr als 2000 Maschen je Zoll, und mit einer durch Flachwalzen oder Flachpressen auf < 0,004 mm verringerten Maschenweite, die
parallel zur Strömungsrichtung des zu filternden Mediums angeordnet ist und
auf der quer zur Strömungsrichtung turbulenzerzeugende Erhöhungen (8, 9, 16, 17) angeordnet sind.

6. Ultrafiltrationsseparator nach Anspruch 5, **dadurch gekennzeichnet,** daß länglichen Erhöhungen (8, 9, 14, 17) zur Strömungsrichtung in einem Winkel von 90° angeordnet sind.

7. Ultrafiltrationsseparator nach Anspruch 5 oder 6, **dadurch gekennzeichnet,** daß die länglichen Erhöhungen (8, 9, 14, 17) auf die Membran (7, 15) aufgesetzt sind.

8. Ultrafiltrationsseparator nach Anspruch 6 oder 7, **dadurch gekennzeichnet,** daß die Membran (15) auf einem rechteckigen oder quadratischen Rahmen (16) mit quer zur Strömungsrichtung verlaufenden Verbindungsstegen (17) angeordnet ist.

9. Ultrafiltrationsseparator nach Anspruch 8, **dadurch gekennzeichnet,** daß die Membran (15) zwischen zwei rechteckigen oder quadratischen Rahmen (13, 16) mit quer zur Strömungsrichtung verlaufenden Verbindungsstegen (14, 17) eingespannt ist.

10. Ultrafiltrationsseparator nach Anspruch 9, **dadurch gekennzeichnet,** daß die Verbindungsstege (14) auf der Druckseite niedriger als die Rahmen (16) sind.

11. Ultrafiltrationsseparator nach Anspruch 9, **dadurch gekennzeichnet,** daß mehrere Rahmen (13, 16) mit Membranen (15) parallel zueinander zu einem Plattenfilter (11) angeordnet sind.

12. Ultrafiltrationsseparator nach einem oder mehreren der Ansprüche 5 bis 7, **dadurch gekennzeichnet,** daß wenigstens eine rohrförmige Membran (7) in einem Rohr (2) mit Abstand zur Rohrinnenwand und abgedichtet an den Rohrenden angeordnet, die Rohrenden mit Abschlußdeckeln (4) mit je einem Zufluß (5) und einem Abfluß (6) für das zu filternde Medium versehen sind.

13. Ultrafiltrationsseparator nach Anspruch 12, **dadurch** **gekennzeichnet,** daß im Rohr (2) ein Abstandshalter für die Membran (7) in Form einer an der Rohrinnenwand anliegenden zylindrischen Schraubenfeder (8) angeordnet ist.

14. Ultrafiltrationsseparator nach Anspruch 13, **dadurch gekennzeichnet,** daß die zylindrische Schraubenfeder (8) bei einem Rohrinnendurchmesser von 80 mm, einen Drahtdurchmesser von 4 mm und eine Steigung von 30 mm aufweist.

15. Ultrafiltrationsseparator nach Anspruch 13 oder 14, **dadurch gekennzeichnet,** daß in der rohrförmigen Membran (7) eine an der Membraninnenwand anliegende zylindrische Schraubenfeder (9) angeordnet ist.

16. Ultrafiltrationsseparator nach Anspruch 15, **dadurch gekennzeichnet,** daß die in der rohrförmigen Membran (7) angeordnete zylindrische Schraubenfeder (9) linksgängig und die zwischen der Membran (7) und der Rohrinnenwand angeordnete zylindrische Schraubenfeder (8) rechtsgängig ist bzw. umgekehrt.

17. Ultrafiltrationsseparator nach Anspruch 15 oder 16, **dadurch gekennzeichnet,** daß die in der rohrförmigen Membran (7) angeordnete zylindrische Schraubenfeder (9) bei einem Rohrdurchmesser von 80 mm, einem Drahtdurchmesser von 4 mm und eine Steigung von 30 mm aufweist.

18. Ultrafiltrationsseparator nach Anspruch 13 oder 14, **dadurch** **gekennzeichnet,** daß der Innenraum der rohrförmigen Membran (7) durch ein spiralig verdrehtes Band ausgefüllt ist.

19. Ultrafiltrationsseparator nach einem oder mehreren der Ansprüche 12 bis 18, **dadurch gekennzeichnet,** daß in der Rohrwandung wenigstens ein Auslaß (10) für Permeat angeordnet ist.

20. Ultrafiltrationsseparator nach einem oder mehreren der Ansprüche 12 bis 19, **dadurch gekennzeichnet,** daß mehrere rohrförmige Membranen (7) konzentrisch und beabstandet zueinander in einem Rohr (2) angeordnet sind.

21. Ultrafiltrationsseparator nach einem oder mehreren der Ansprüche 5 - 20, **dadurch gekennzeichnet,** daß mehrere Lagen der Membranen (7, 15) aufeinander gelegt oder gewickelt sind.

## Claims

1. Use of a tissue of metal filaments with a filament diameter of < 0.02 mm, more than 2000 wefts, that is, more than 2000 meshes per inch, and with a mesh width, reduced by rolling flat or pressing flat, of < 0.004 mm, as an ultrafiltration separating membrane.

2. Use of a tissue of metal filaments in accordance with claim 1, with more than 3000 wefts per inch and a mesh width of < 0.002 mm, reduced to this by rolling flat or by compression.

3. Use of a tissue of metal filaments, made of rustproof steel, in accordance with claim 1 or claim 2.

4. Use of a tissue of metal filaments, made of titanium, in accordance with claim 1 or claim 2.

5. Ultra-filtration separator with one ultra-filtration membrane (7, 15) made of a tissue of filaments of rustproof steel or titanium with a diameter < 0.02 mm, more than 2000 wefts, that is, more than 2000 wefts per inch, and with a mesh width of < 0.004 mm, reduced to this size by rolling flat or by compression, which is disposed parallel to a direction of flow of a medium to be filtrated and on which raised members (8, 9, 16, 17) producing turbulence are disposed transverse to a direction of flow.

6. Ultra-filtration separator in accordance with claim 5, wherein lengthwise raised members (8, 9, 14, 17) are disposed at an angle of 90° in relation to a direction of flow.

7. Ultra-filtration separator in accordance with claim 5 or 6, wherein lengthwise raised members (8, 9, 14, 17) are applied onto a membrane (7, 15).

8. Ultra-filtration separator in accordance with claim 6 or claim 7, wherein a membrane (15) is disposed on a square or rectangular frame (16) with connecting webs (17) running transversely in relation to a direction of flow.

9. Ultra-filtration separator in accordance with claim 8, wherein a membrane (15) between two square or rectangular frames (13, 16) is held by connecting webs (14, 17) running transversely in relation to a direction of flow concerned.

10. Ultra-filtration separator in accordance with claim 9, wherein connecting webs (14) are lower on a pressure surface than on a frame (16).

11. Ultra-filtration separator in accordance with claim 9, wherein several frames (13, 16) with membranes (15) are disposed parallel to each other and in relation to a plate filter (11).

12. Ultra-filtration separator in accordance with one or several of claims 5 to 7, wherein at least one pipe-shaped membrane (7) is disposed in a pipe (2) with a separation from a pipe inner wall and is sealed at ends of this pipe-form, and those ends are provided with shut-off covers (4) which each have an inlet (5) and an outlet (6) for a medium to be filtered.

13. Ultra-filtration separator in accordance with claim 2, wherein means of holding a membrane at a distance of separation, developed as a cylindrical, helical spring (8) lying on a pipe inner wall, and disposed in a pipe (2).

14. Ultra-filtration separator in accordance with claim 13, wherein a cylindrically helical spring (8) has a wire diameter of 4 mm and a lead of 30 mm, for a pipe internal diameter of 80 mm.

15. Ultra-filtration separator in accordance with claim 3 or 4, wherein a cylindrical, helical spring (9), lying on a membrane inner wall is disposed in a tube-shaped member (7).

16. Ultra-filtration separator in accordance with claim 5, wherein a cylindrical, helical spring (9), disposed in a tube-shaped membrane (7), spirals forwards from right to left and a cylindrical, helical spring (8), disposed between a membrane (7) and a pipe inner wall, spirals forward from left to right.

17. Ultra-filtration separator in accordance with claim 5 or claim 6, wherein a cylindrical, helical spring (9), disposed in a tube-shaped membrane (7), has a lead of 30 mm and a wire diameter of 4 mm, with a tube-diameter of 80 mm.

18. Ultra-filtration separator in accordance with claim 3 or claim 4, wherein an inner space of a tube-shaped membrane (7) is filled by a spiralling strip.

19. Ultra-filtration separator in accordance with one or several of claims 2 to 8, wherein at least one outlet (10) for permeation is disposed in tube walling.

20. Ultra-filtration separator in accordance with claims 2 to 19, wherein several membranes (7) are disposed separated concentrically in relation to each other, in a tube (2).

21. Ultra-filtration separator in accordance with one or several of claims 5 - 20, wherein several layers of membranes (7, 15) are laid one on top of another or are wound one on top of another.

## Revendications

1. Utilisation d'un tissu en fil métallique, le fil métallique ayant un diamètre < 0,02 mm, une trame supérieure à 2000, c'est-à-dire ayant plus de 2000 mailles par pouce, et avec une largeur de maille diminuée par roulage à plat ou pressage à plat, pour être < 0,004 mm, utilisée comme membrane séparatrice pour ultrafiltration dans un séparateur à ultrafiltration.

2. Utilisation d'un tissu en fil métallique selon la revendication 1 ayant une trame supérieure à 3000, c'est-à-dire plus de 3000 mailles par pouce, et une largeur de maille diminuée par roulage à plat ou pressage à plat, pour être < 0,002 mm.

3. Utilisation d'un tissu en fil métallique en acier inoxydable, selon la revendication 1 ou 2.

4. Utilisation d'un tissu en fil métallique constitué de fil en titane, selon la revendication 1 et 2.

5. Séparateur à ultrafiltration comportant
une membrane séparatrice à ultrafiltration (7, 15), un tissu inoxydable en fil d'acier ou en fil de titane ayant un diamètre < 0,02 mm, une trame supérieure à 2000 c'est-à-dire plus de 2000 mailles par pouce et avec une largeur de maille diminuée par roulage à plat ou pressage à plat, pour être < à 0,004 mm, qui est disposée à la direction d'écoulement du milieu à filtrer, et des saillies (8, 9, 14, 17) produisant de la turbulence, étant disposées transversalement par rapport à la direction de l'écoulement.

6. Séparateur à ultrafiltration selon la revendication 5, caractérisé en ce que les saillies (8,

7. Séparateur à ultrafiltration selon la revendication 5 ou 6, caractérisé en ce que les saillies (8, 9, 14, 17) allongées sont appliquées sur la membrane (7, 15).

8. Séparateur à ultrafiltration selon la revendication 6 ou 7, caractérisé en ce que la membrane (15) est disposée sur un cadre (16) rectangulaire ou carrée, ayant des nervures de liaison (17) s'étendant transversalement par rapport à la direction de l'écoulement.

9. Séparateur à ultrafiltration selon la revendication 8, caractérisé en ce que la membrane (15) est bloquée par serrage entre deux cadres (13, 16) rectangulaires ou carrées ayant des nervures de liaison (14, 17) s'étendant transversalement par rapport à la direction de l'écoulement.

10. Séparateur à ultrafiltration selon la revendication 9, caractérisé en ce que les nervures de liaison (14) du côté pression sont plus basses que le cadre (16).

11. Séparateur à ultrafiltration selon la revendication 9, caractérisé en ce que plusieurs cadres (13, 16) avec des membranes (15) parallèles entre elles sont disposées pour constituer un filtre-plaque.

12. Séparateur à ultrafiltration selon l'une ou plusieurs des revendications 5 à 7, caractérisé en ce qu'au moins une membrane tubulaire (7) est disposée dans un tube (2) à distance de la paroi intérieure du tube et isolée de manière étanche aux extrémités du tube, les extrémités de tube étant pourvues de couvercles de fermeture (4) ayant chacun une alimentation (5) et une évacuation (6) pour le milieu à filtrer.

13. Séparateur à ultrafiltration selon la revendication 12, caractérisé en ce qu'un élément d'espacement destiné à la membrane (7) se présentant sous la forme d'un ressort hélicoïdal (8) cylindrique et appuyant sur la paroi intérieure du tube (2), est disposé dans le tube.

14. Séparateur à ultrafiltration selon la revendication 3, caractérisé en ce que le ressort hélicoïdal (8) cylindrique présente un diamètre de fil de 4 mm et un pas de 30 mm pour un diamètre intérieur de tube de 80 mm.

15. Séparateur à ultrafiltration selon la revendication 3 ou 4, caractérisé en ce qu'un ressort hélicoïdal (9) cylindrique appuyant sur la paroi intérieure de la membrane est disposé dans la membrane tubulaire (7).

16. Séparateur à ultrafiltration selon la revendication 5, caractérisé en ce que le ressort hélicoidal (9) cylindrique disposé dans la membrane tubulaire (7) est doté d'un pas à gauche et le ressort hélicoidal cylindrique (8) disposé entre la membrane (7) et la paroi intérieure de tube est doté d'un pas à droite, ou inversement.

17. Séparateur à ultrafiltration selon la revendication 5 ou 6, caractérisé en ce que le ressort hélicoïdal (9) disposé dans la membrane tubulaire (7) a un diamètre de fil de 4 mm et un pas de 30 mm pour un diamètre de tube de 80 mm.

18. Séparateur à ultrafiltration selon la revendication 3 ou 4, caractérisé en ce que l'espace intérieur de la membrane tubulaire (7) est rempli d'une bande enroulée en spirale.

19. Séparateur à ultrafiltration selon l'une ou plusieurs des revendications 12 à 18, caractérisé en ce qu'au moins une évacuation (10), destinée au perméat, est disposée dans la membrane tubulaire.

20. Séparateur à ultrafiltration selon l'une ou plusieurs des revendications 2 à 19, caractérisé en ce que plusieurs membranes tubulaires (7) sont disposées concentriquement et à distance les unes des autres dans un tube (2).

21. Séparateur à ultrafiltration selon l'une ou plusieurs des revendications 5 à 20, caractérisé en ce que plusieurs couches des membranes (7, 15) sont posées ou enroulées les unes sur les autres.
